# FASCICULE DE BREVET EUROPEEN

(11) **EP 2 668 052 B1**
(45) Date de publication et mention de la délivrance du brevet: **15.10.2014**
(21) Numéro de dépôt: 11815489.7
(22) Date de dépôt: 20.12.2011
(51) Int. Cl.: B60J 1/17, B60J 1/00

(54) **VITRE POUR VEHICULE, ENSEMBLE DE VITRAGE COMPRENANT UNE TELLE VITRE ET VEHICULE COMPRENANT UN TEL ENSEMBLE DE VITRAGE.**
FAHRZEUGFENSTER, VERGLASUNGSANORDNUNG MIT EINEM SOLCHEN FENSTER UND FAHRZEUG MIT EINER SOLCHEN VERGLASUNGSANORDNUNG
VEHICLE WINDOW, GLAZING ASSEMBLY COMPRISING SUCH A WINDOW AND VEHICLE COMPRISING SUCH A GLAZING ASSEMBLY

(30) Priorité: 24.01.2011 FR 1150521
(43) Date de publication de la demande: 04.12.2013
(73) Titulaire: Peugeot Citroën Automobiles SA, 78140 Vélizy Villacoublay (FR)
(72) Inventeur: FINOT, Emmanuel, F-92360 Meudon La Foret (FR)
(86) Numéro de dépôt international: PCT/FR2011/053117
(87) Numéro de publication internationale: WO 2012/101346

(56) Documents cités:
- JP-A- 7 266 873
- JP-A- 2003 148 046
- JP-A- 2006 232 222

## Description

La présente invention concerne une vitre pour un véhicule présentant des ouvertures. De plus, la présente invention concerne un ensemble de vitrage comprenant une telle vitre. Par ailleurs, la présente invention concerne un véhicule comprenant un tel ensemble de vitrage.

La présente invention trouve notamment application dans le domaine automobile, pour la fabrication et l'assemblage des vitres d'un véhicule. Le document JP 2003148046 montre une vitre selon le préambule de la revendication 1.

Un véhicule de l'art antérieur présente des ouvertures obturables par des vitres mobiles, en particulier des ouvertures latérales ménagées dans les ouvrants ou portières. Un tel véhicule comprend, pour chaque ouverture, une coulisse définissant une partie de l'ouverture.

Chaque vitre est mobile entre une position de fermeture, dans laquelle la vitre obture l'ouverture, et une position d'ouverture dans laquelle la vitre dégage l'ouverture. La vitre comprend un bord terminal curviligne qui est adapté pour coopérer, en position de fermeture, avec une rainure de la coulisse, de façon à obturer totalement l'ouverture. Dans une vitre de l'art antérieur, le bord terminal de la vitre et le fond de la rainure de coulisse sont incurvés suivant des courbes identiques. Ainsi, la totalité du bord terminal accoste le fond de la rainure lorsque la vitre est en position de fermeture.

Cependant, lorsque le véhicule roule, en particulier à grande vitesse, des efforts aérodynamiques « aspirent » la vitre et s'exercent sur elle de sorte que la partie haute de la vitre, dont le bord terminal, subit un déplacement vers l'extérieur du véhicule. Un tel déplacement nécessite des efforts supplémentaires pour insérer le bord terminal dans la rainure de coulisse, ces efforts supplémentaires étant d'autant plus grands que le véhicule roule vite.

La présente invention vise notamment à résoudre, en tout ou partie, les problèmes mentionnés ci-avant.

A cet effet, l'invention a pour objet une vitre pour un véhicule présentant au moins une ouverture et comprenant au moins une coulisse définissant au moins une partie de l'ouverture, la vitre étant mobile entre une position de fermeture, dans laquelle la vitre obture l'ouverture, et une position d'ouverture, dans laquelle la vitre dégage l'ouverture, la vitre comprenant :
- un bord terminal curviligne adapté pour coopérer, dans la position de fermeture, avec une rainure de la coulisse de façon à obturer totalement l'ouverture;
la vitre étant caractérisée en ce que le bord terminal présente, en vue de côté :
- au moins deux segments d'accostage destinés à accoster la rainure ; et
- au moins un segment intermédiaire s'étendant entre des segments d'accostage;
le ou chaque segment intermédiaire formant un creux par rapport aux segments d'accostage.

En d'autres termes, les segments d'accostage forment une saillie du bord terminal, alors que le ou chaque segment intermédiaire forme un creux du bord terminal. La courbure générale du bord terminal est donc infléchie entre chaque segment d'accostage et le ou chaque segment intermédiaire.

Ainsi, une telle vitre permet de limiter l'effort à exercer pour insérer son bord terminal dans la rainure de coulisse. En effet, il suffit d'insérer dans la rainure les segments d'accostage, puis le reste du bord terminal, à savoir le ou chaque segment intermédiaire, qui est guidé sans effort supplémentaire vers la rainure.

Selon un mode de réalisation, le bord terminal présente deux segments d'accostage et un seul segment intermédiaire.

En d'autre terme, les segments d'accostage sont situés de chaque côté du bord terminal et de part et d'autre du segment intermédiaire.

Ainsi, le bord terminal présente seulement deux points où se produit le premier contact avec la coulisse, ce qui permet de limiter l'effort à exercer pour la fermeture totale de la vitre.

Selon un mode de réalisation, le bord terminal présente au moins trois segments d'accostage et au moins deux segments intermédiaires.

Ainsi, le bord terminal présente trois points où se produit le premier contact avec la coulisse, ce qui facilite le guidage donc l'insertion, du bord terminal dans la coulisse.

Selon un mode de réalisation, la vitre comprend en outre un bord inférieur situé à l'opposé du bord terminal, et le ou chaque segment intermédiaire est situé entre le bord inférieur et une courbe prolongeant et raccordant entre eux les segments d'accostage.

Ainsi, un tel segment intermédiaire permet de garantir que les premiers contacts se produisent entre les segments d'accostage et la coulisse.

Selon un mode de réalisation, la distance séparant un segment intermédiaire de ladite courbe est comprise entre 1 mm et 4 mm, de préférence entre 2 mm et 3 mm, le ou chaque segment intermédiaire étant de préférence substantiellement parallèle à ladite courbe.

Ainsi, une telle distance permet de réaliser les premiers contacts entre les segments d'accostage et la coulisse, tout en assurant l'étanchéité du bord terminal lorsque la vitre est en position de fermeture.

Selon un mode de réalisation, la distance séparant un segment intermédiaire de ladite courbe croît progressivement depuis chaque segment d'accostage de sorte que la distance maximale se trouve au milieu du bord terminal.

Ainsi, une telle progression de cette distance permet de minimiser l'effort à exercer pour fermer la vitre.

Selon un mode de réalisation, un rapport ayant :
- pour numérateur, la somme des longueurs curvilignes de chaque segment intermédiaire ; et
- pour dénominateur, la longueur du bord terminal ;
est compris entre 75% et 95%, de préférence entre 80% et 90%, de préférence encore entre 84% et 88%.

Ainsi, un tel rapport permet de minimiser l'effort à exercer pour fermer la vitre tout en assurant un guidage approprié du bord terminal dans la coulisse au cours de la fermeture de la vitre.

Par ailleurs, la présente invention a pour objet un ensemble de vitrage pour un véhicule, l'ensemble de vitrage comprenant la coulisse, laquelle présente une rainure et définit au moins une partie d'une ouverture du véhicule, l'ensemble de vitrage étant caractérisé en ce qu'il comprend une vitre telle que précédemment exposée.

Ainsi, un tel ensemble de vitrage permet d'insérer la vitre dans la coulisse en exerçant un effort réduit.

Selon un mode de réalisation, le fond de la rainure est défini par une courbe de fond, le ou chaque segment intermédiaire étant situé entre le bord inférieur et la courbe de fond, lorsque la vitre est en position de fermeture.

Ainsi, lorsque la vitre approche de sa position de fermeture, la coopération de son bord terminal avec le fond de la rainure de coulisse est réalisée d'abord au niveau des segments d'accostage, puis au niveau du haut de chaque segment intermédiaire.

De plus, la présente invention a pour objet un véhicule présentant au moins une ouverture, caractérisé en ce qu'il comprend un ensemble de vitrage tel que précédemment exposé.

Ainsi, un tel véhicule comporte des vitres mobiles, par exemple quatre, qui sont aisées à fermer.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue schématique d'un véhicule conforme à l'invention, avec un ensemble de vitrage conforme à l'invention, et illustrant le profil d'une vitre conforme à l'invention ;
- la figure 2 est une vue du détail II à la figure 1 ;
- la figure 3 est une vue du détail III à la figure 1 ;
- la figure 4 est une vue du détail IV à la figure 1.

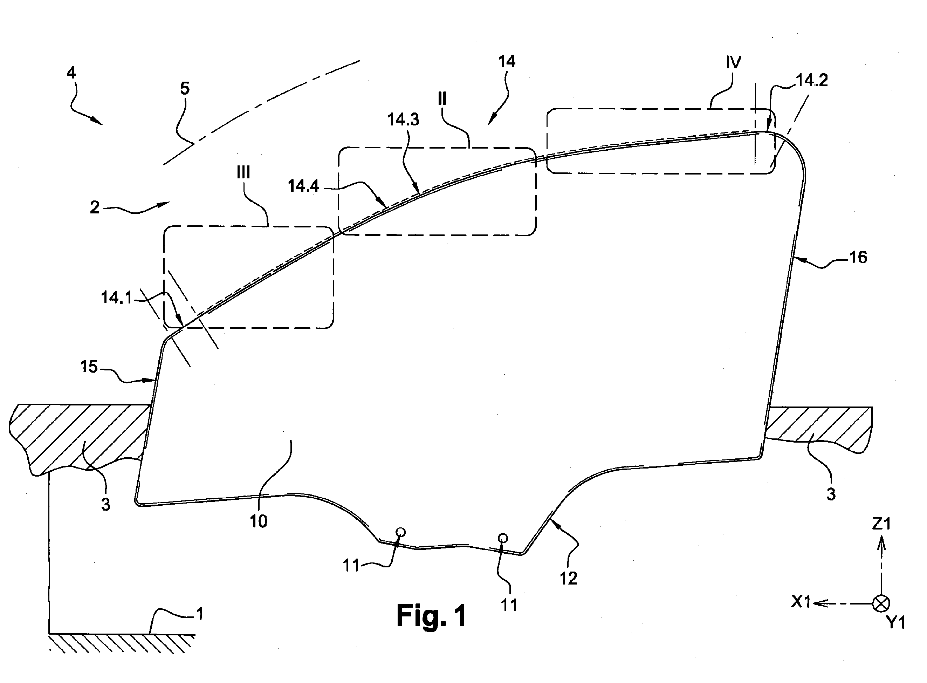

La figure 1 illustre schématiquement un véhicule 1 qui présente quatre ouvertures latérales, dont l'une est symbolisée à la figure 1 avec la référence 2. L'ouverture 2 est une ouverture latérale avant qui s'étend au niveau d'une portière 3 située à l'avant du véhicule 1. Le véhicule 1 comprend un ensemble de vitrage 4 monté sur la portière 3.

L'ensemble de vitrage 4 comprend une coulisse 5, dont une portion supérieure est schématisée en trait mixte à la figure 1, ainsi qu'une vitre 10. La coulisse 5 définit une partie de l'ouverture 2. La portière 3 définit une autre partie de l'ouverture 2.

La vitre 10 est mobile entre une position de fermeture, dans laquelle la vitre 10 obture l'ouverture 2, et une position d'ouverture, dans laquelle la vitre 10 dégage l'ouverture 2. Sur la figure 1, la vitre 10 est représentée dans une position où elle obture partiellement l'ouverture 2. La vitre 10 est mobile, car elle est reliée à un actionneur non représenté, notamment par l'intermédiaire de trous 11 percés près d'un bord inférieur 12 de la vitre 10.

La vitre 10 comprend un bord terminal 14 qui est curviligne et qui est adapté pour coopérer, dans la position de fermeture, avec une rainure non représentée de la coulisse 5 de façon à obturer totalement l'ouverture 2. Le bord terminal 14 est situé à l'opposé du bord inférieur 12. Le bord terminal a une longueur comprise entre 600 mm et 1000 mm.

Lorsque le véhicule est en service, le bord terminal 14 délimite substantiellement une partie supérieure de la vitre 10. La rainure de la coulisse 5 est définie par un joint non représenté formant la coulisse 5.

Dans la présente demande, un élément qualifié de longitudinal s'étend dans une direction longitudinale X1 suivant laquelle le véhicule 1 avance en marche normale. Les termes « avant » et « arrière » se rapportent à la direction longitudinale X1.

Dans la présente demande, le terme « latéral » et ses dérivés désignent un élément disposé près de l'un des côtés, droit ou gauche, du véhicule 1. Le terme « latéral » et ses dérivés distinguent des éléments suivant une direction transversale Y1 qui est perpendiculaire à la direction longitudinale X1.

Dans la présente demande, un élément qualifié par le terme « inférieur » ou « bas » ou un dérivé est situé plus près du sol ou du bas de caisse, lorsque le véhicule 1 est en service, qu'un élément qualifié par les termes « supérieur » ou « haut » ou un dérivé. Sur la figure 1, l'axe Z1 est vertical et ascendant lorsque le véhicule 1 avance en marche normale sur un support horizontal.

La vitre 10 comprend un bord latéral avant 15 et un bord latéral arrière 16 qui relie le bord terminal 14 au bord inférieur 12.

Comme le montre la figure 1, en vue de côté, le bord terminal 14 présente :
- deux segments d'accostage, à savoir un segment d'accostage avant 14.1 et un segment d'accostage arrière 14.2, qui sont destinés à accoster le fond de la rainure de la coulisse 5; et
- un segment intermédiaire 14.3 qui s'étend entre le segment d'accostage avant 14.1 et le segment d'accostage arrière 14.2 ;

Le bord terminal 14 présente ainsi deux segments d'accostage, avant 14.1 et arrière 14.2, et un seul segment intermédiaire 14.3. Le segment intermédiaire 14.3 et les segments d'accostage avant 14.1 et arrière 14.2 ont des courbures générales convexes.

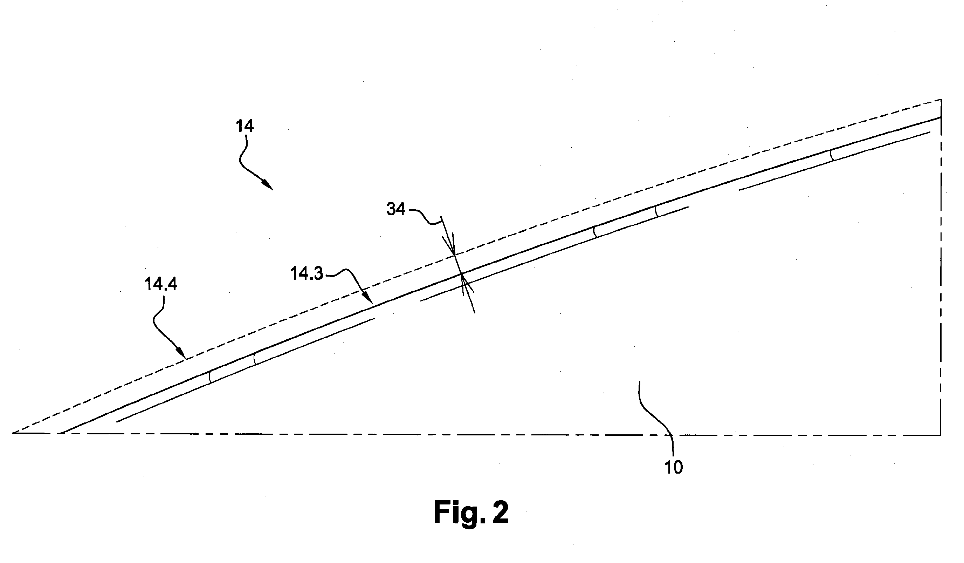

Comme le montrent les figures 2, 3 et 4, le segment intermédiaire 14.3 forme un creux par rapport aux segments d'accostage 14.1 et 14.2. Le segment intermédiaire 14.2 est ainsi situé entre le bord inférieur 12 et une courbe 14.4 qui prolonge et raccorde entre eux les segments d'accostage avant 14.1 et arrière 14.2.

Dans la présente demande, le terme « prolonger » et ses dérivés indique que la courbe 14.4 est localement tangente au segment d'accostage avant 14.1 et au segment d'accostage arrière 14.2

Dans l'exemple des figures, la distance 34, matérialisée à la figure 2, qui sépare le segment intermédiaire 14.3 de la courbe 14.4 est comprise entre 2 mm et 3 mm. Comme le montre la figure 2, le segment intermédiaire 14.3 est substantiellement parallèle à la courbe 14.4.

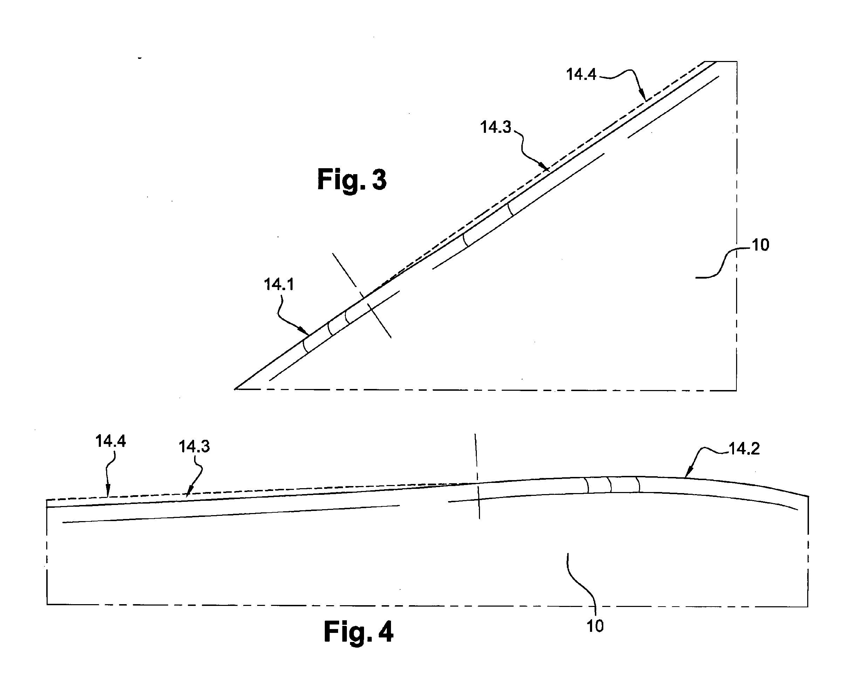

Comme le montrent les figures 3 et 4, la distance 34 croît progressivement depuis le segment d'accostage avant 14.1 ou le segment d'accostage arrière 14.2 Cette distance 34 est maximale au milieu du bord terminal 14.

De plus, un rapport ayant :
- pour numérateur, la longueur curviligne du segment intermédiaire 14.3 ; et
- pour dénominateur, la longueur curviligne du bord terminal 14 ; est d'environ 86%, c'est-à-dire compris entre 84% et 88%. Dans la présente demande, une longueur curviligne est mesurée
suivant la courbe 14.4.

La courbe 14.4 est une courbe fictive qui prolonge et raccorde les segments d'accostage avant 14.1 et arrière 14.2. En pratique, la courbe 14.4 correspond à une courbe de fond qui définit le fond de la rainure de la coulisse 5. Ainsi, pour l'ensemble de vitrage 4, le segment intermédiaire 14.3 est situé entre le bord inférieur 12 et cette courbe de fond, lorsque la vitre 10 est en position de fermeture.

Selon d'autres caractéristiques avantageuses mais facultatives, prises isolément ou selon toute combinaison techniquement admissible :
- La distance séparant le bord terminal et la courbe raccordant les segments d'accostage peut être comprise entre 1 mm et 4 mm.
- Le bord terminal présente au moins trois segments d'accostage et au moins deux segments intermédiaires.
- Le rapport de la longueur curviligne du segment intermédiaire sur la longueur curviligne du bord terminal peut être compris entre 75% et 94%, de préférence entre 80% et 90%.
- Le bord terminal présente en outre deux segments latéraux, qui s'étendent chacun entre un segment d'accostage et un bord latéral et qui sont situés entre le bord inférieur et la courbe prolongeant et raccordant entre eux les segments d'accostage.

## Revendications

1. Vitre (10), pour un véhicule (1) présentant au moins une ouverture (2) et comprenant au moins une coulisse (5) définissant au moins une partie de l'ouverture (2), la vitre (10) étant mobile entre une position de fermeture, dans laquelle la vitre (10) obture l'ouverture (2), et une position d'ouverture, dans laquelle la vitre (10) dégage l'ouverture (2), la vitre (10) comprenant :
- un bord terminal (14) curviligne adapté pour coopérer, dans la position de fermeture, avec une rainure de la coulisse (5) de façon à obturer totalement l'ouverture (2) ;
la vitre (10) étant **caractérisée en ce que** le bord terminal (14) présente, en vue de côté :
- au moins deux segments d'accostage (14.1, 14.2) destinés à accoster la rainure ; et
- au moins un segment intermédiaire (14.3) s'étendant entre des segments d'accostage (14.1, 14.2) ;
le ou chaque segment intermédiaire (14.3) formant un creux par rapport aux segments d'accostage (14.1, 14.2).

2. Vitre (10) selon la revendication 1, dans laquelle le bord terminal (14) présente deux segments d'accostage (14.1, 14.2) et un seul segment intermédiaire (14.3).

3. Vitre selon la revendication 1, dans laquelle le bord terminal présente au moins trois segments d'accostage et au moins deux segments intermédiaires.

4. Vitre (10) selon l'une des revendications précédentes, comprenant en outre un bord inférieur (12) situé à l'opposé du bord terminal (14), et dans laquelle le ou chaque segment intermédiaire (14.3) est situé entre le bord inférieur (12) et une courbe (14.4) prolongeant et raccordant entre eux les segments d'accostage (14.1, 14.2).

5. Vitre (10) selon la revendication 4, dans laquelle la distance séparant un segment intermédiaire (14.3) de ladite courbe (14.4) est comprise entre 1 mm et 4 mm, de préférence entre 2 mm et 3 mm, le ou chaque segment intermédiaire (14.3) étant de préférence substantiellement parallèle à ladite courbe (14.4).

6. Vitre (10) selon la revendication 5, dans laquelle la distance séparant un segment intermédiaire (14.3) de ladite courbe (14.4) croît progressivement depuis chaque segment d'accostage (14.1, 14.2) de sorte que la distance maximale (34) se trouve au milieu du bord terminal (14).

7. Vitre (10) selon l'une des revendications précédentes, dans laquelle un rapport ayant :
- pour numérateur, la somme des longueurs curvilignes de chaque segment intermédiaire (14.3) ; et
- pour dénominateur, la longueur curviligne du bord terminal (14) ;
est compris entre 75% et 95%, de préférence entre 80% et 90%, de préférence encore entre 84% et 88%.

8. Ensemble de vitrage (4) pour un véhicule (1), l'ensemble de vitrage (4) comprenant la coulisse (5), laquelle présente une rainure et définit au moins une partie d'une ouverture (2) du véhicule (1), l'ensemble de vitrage (4) étant **caractérisé en ce qu'**il comprend une vitre (10) selon l'une des revendications précédentes.

9. Ensemble de vitrage (4) selon la revendication 8, dans lequel le fond de la rainure est défini par une courbe de fond, le ou chaque segment intermédiaire (14.3) étant situé entre le bord inférieur (12) et la courbe de fond, lorsque la vitre (10) est en position de fermeture.

10. Véhicule (1) présentant au moins une ouverture (2), **caractérisé en ce qu'**il comprend un ensemble de vitrage (4) selon la revendication 8 ou 9.

## Patentansprüche

1. Fensterscheibe (10) für ein Fahrzeug (1), die zumindest eine Öffnung (2) aufweist und zumindest eine Kulisse (5) enthält, die zumindest einen Teil der Öffnung definiert, wobei die Fensterscheibe (10) zwischen einer Schließstellung, in der die Fensterscheibe (10) die Öffnung (2) abdeckt, und einer Öffnungsstellung beweglich ist, in der die Fensterscheibe (10) die Öffnung (2) freigibt, wobei die Fensterscheibe (10) folgendes enthält:
- eine krummlinige Abschlusskante (14), die sich dazu eignet, in der Schließstellung mit der Nut der Kulisse (5) zusammenzuwirken, um die Öffnung (2) vollständig zu verschließen;
wobei die Fensterscheibe (10) **dadurch gekennzeichnet, ist, dass** die Abschlusskante (14) von der Seite gesehen folgendes aufweist:
- zumindest zwei Anfahrsegmente (14.1, 14.2), die dazu bestimmt sind, die Nut anzufahren; und
- zumindest ein Zwischensegment (14.3), das sich zwischen den Anfahrsegmenten (14.1, 14.2) erstreckt; wobei das oder jedes Zwischensegment (14.3) in Bezug auf die Anfahrsegmente (14.1, 14.2) eine Mulde bildet.

2. Fensterscheibe (10) nach Anspruch 1, bei der die Abschlusskante (14) zwei Anfahrsegmente (14.1, 14.2) und ein einziges Zwischensegment (14.3) aufweist.

3. Fensterscheibe nach Anspruch 1, bei der die Abschlusskante zumindest drei Anfahrsegmente und zumindest zwei Zwischensegmente aufweist.

4. Fensterscheibe (10) nach einem der vorherigen Ansprüche, die darüber hinaus eine Unterkante (12) enthält, die sich gegenüber der Abschlusskante (14) befindet, und in der sich das oder jedes Zwischensegment (14.3) zwischen der Unterkante (12) und einer Krümmung (14.4) befindet, die die Anfahrsegmente (14.1, 14.2) verlängern und miteinander verbinden.

5. Fensterscheibe (10) nach Anspruch 4, bei der der Abstand zwischen einem Zwischensegment (14.3) und der besagten Krümmung (14.4) zwischen 1 mm und 4 mm, vorzugsweise zwischen 2 mm und 3 mm liegt, wobei das oder jedes Zwischensegment (14.3) vorzugsweise substantiell parallel zur besagten Krümmung (14.4) verläuft.

6. Fensterscheibe (10) nach Anspruch 5, bei der der Abstand zwischen einem Zwischensegment (14.3) und der besagten Krümmung (14.4) progressiv aus jedem Anfahrsegment (14.1, 14.2) heraus anwächst, sodass sich der maximale Abstand (34) in der Mitte der Abschlusskante (14) befindet.

7. Fensterscheibe (10) nach einem der vorherigen Ansprüche, bei der ein Verhältnis mit:
- der Summe der krummlinigen Längen eines jeden Zwischensegments (14.3) als Zähler; und
- der krummlinigen Länge der Abschlusskante (14) als Nenner;
zwischen 75% und 95%, vorzugsweise zwischen 80% und 90%, noch bevorzugter zwischen 84% und 88% liegt.

8. Verglasungseinheit (4) für ein Fahrzeug (1), wobei die Verglasungseinheit (4) die Kulisse (5) enthält, welche eine Nut aufweist und zumindest einen Abschnitt einer Öffnung (2) des Fahrzeugs (1) definiert, und die Verglasungseinheit (4) **dadurch gekennzeichnet ist, dass** sie eine Fensterscheibe (10) nach einem der vorherigen Ansprüche enthält.

9. Verglasungseinheit (4) nach Anspruch 8, bei der der Boden der Nut durch eine Bodenkrümmung definiert wird, und sich das oder jedes Zwischensegment (14.3) zwischen der Unterkante (12) und der Bodenkrümmung befindet, wenn sich die Fensterscheibe (10) in der Schließstellung befindet.

10. Fahrzeug (1) mit zumindest einer Öffnung (2), **dadurch gekennzeichnet, dass** es eine Verglasungseinheit (4) nach Anspruch 8 oder 9 enthält.

## Claims

1. Window (10) for a vehicle (1), having at least one opening (2) and comprising at least one slide (5) defining at least part of the opening (2), the window (10) being able to move between a closed position in which the window (10) closes off the opening (2) and an open position in which the window (10) leaves the opening (2) clear, the window (10) comprising:
- a curved terminal edge (14) suitable for cooperating, in the closed position, with a groove on the slide (5) so as to completely close off the opening (2);
the window (10) being **characterised in that** the terminal edge (14) has, in side view:
- at least two docking segments (14.1, 14.2) intended to dock in the groove; and
- at least one intermediate segment (14.3) extending between docking segments (14.1, 14.2);
the or each intermediate segment (14.3) forming a hollow with respect to the docking segments (14.1, 14.2).

2. Window (10) according to claim 1, in which the terminal edge (14) has two docking segments (14.1, 14.2) and a single intermediate segment (14.3).

3. Window according to claim 1, in which the terminal edge has at least three docking segments and at least two intermediate segments.

4. Window (10) according to one of the preceding claims, further comprising a bottom edge (12) situated opposite the terminal edge (14), and in which the or each intermediate segment (14.3) is situated between the bottom edge (12) and a curve (14.4) extending and connecting together the docking segments (14.1, 14.2).

5. Window (10) according to claim 4, in which the distance separating an intermediate segment (14.3) from said curve (14.4) is between 1 mm and 4 mm, preferably between 2 mm and 3 mm, the or each intermediate segment (14.3) preferably being substantially parallel to said curve (14.4).

6. Window (10) according to claim 5, in which the distance separating an intermediate segment (14.3) from said curve (14.4) increases progressively from each docking segment (14.1, 14.2) so that the maximum distance (34) is situated at the middle of the terminal edge (14).

7. Window (10) according to one of the preceding claims, in which a ratio having:
- as its numerator, the sum of the curvilinear lengths of each intermediate segment (14.3); and
- as its denominator, the curvilinear length of the terminal edge (14);
is between 75% and 95%, preferably between 80% and 90%, preferably again between 84% and 88%.

8. Glazing assembly (4) for a vehicle (1), the glazing assembly (4) comprising the slide (5), which has a groove and defines at least part of an opening (2) of the vehicle (1), the glazing assembly (4) being **characterised in that** it comprises a window (10) according to one of the preceding claims.

9. Glazing assembly (4) according to claim 8, in which the bottom of the groove is defined by a bottom curve, the or each intermediate segment (14.3) being situated between the bottom edge (12) and the bottom curve, when the window (10) is in the closed position.

10. Vehicle (1) having at least one opening (2), **characterised in that** it comprises a glazing assembly (4) according to claim 8 or 9.
